Europäisches Patentamt

European Patent Office

Office européen des brevets

(19)

(11) **EP 1 082 604 B1**

(12) **FASCICULE DE BREVET EUROPEEN**

(45) Date de publication et mention
de la délivrance du brevet:
**22.12.2004 Bulletin 2004/52**

(21) Numéro de dépôt: **99920896.0**

(22) Date de dépôt: **20.05.1999**

(51) Int Cl.$^7$: **G01N 21/78**, G01N 21/35

(86) Numéro de dépôt international:
**PCT/FR1999/001200**

(87) Numéro de publication internationale:
**WO 1999/061899 (02.12.1999 Gazette 1999/48)**

(54) **PROCEDE DE DETERMINATION AUTOMATIQUE DU TRICHLORURE D'AZOTE DANS DU CHLORE ET L'ION AMMONIUM DANS DES SAUMURES ET DISPOSITIF POUR METTRE EN OEUVRE CE PROCEDE**

VERFAHREN ZUR AUTOMATISCHEN BESTIMMUNG VON STICKSTOFFTRICHLORID IN CHLOR UND DES AMMONIUMIONS IN SALZLAKEN UND VORRICHTUNG ZUR DURCHFÜHRUNG DIESES VERFAHRENS

METHOD FOR AUTOMATICALLY DETERMINING NITROGEN TRICHLORIDE IN CHLORINE AND AMMONIA ION IN BRINES AND APPARATUS FOR CARRYING OUT THIS METHOD

(84) Etats contractants désignés:
**BE DE ES FR GB IT**

(30) Priorité: **28.05.1998 FR 9806716**

(43) Date de publication de la demande:
**14.03.2001 Bulletin 2001/11**

(73) Titulaire: **Atofina**
**92800 Puteaux (FR)**

(72) Inventeurs:
• **FORT, Jean-Claude**
**13990 Fontvieille (FR)**
• **GASTON, Michel**
**13127 Gardanne (FR)**

(56) Documents cités:
**FR-A- 2 721 596**　　　　**US-A- 4 087 607**

• **AUGER G AND DUBE G: "Automated Determination of Ammonia and Nitrate in Rock Salt and Brine and Nitrogen Trichloride in Chlorine" ADVANCES IN AUTOMATED ANALYSIS, 7TH TECHNICON INTERNATIONAL CONGRESS, DECEMBER 13-15, 1976,1977, pages 99-107, XP002092543 cité dans la demande**
• **ANKERSMIT R ET AL: "The Determination of Nitrogen Trichloride in Liquid Chlorine" ANALYTICA CHIMICA ACTA, vol. 155, 1983, pages 221-233, XP002092544 cité dans la demande**

EP 1 082 604 B1

**Description**

La présente invention concerne un procédé pour déterminer à la fois la teneur en ion ammonium contenu dans des saumures de NaCl et le trichlorure d'azote ($NCl_3$) présent dans le chlore obtenu par électrolyse desdites saumures.

Plus précisément, l'invention concerne un procédé pour déterminer à la fois, la teneur en ion ammonium, ($NH_4^+$) d'échantillons qui sont prélevés périodiquement dans des saumures NaCl et la teneur en $NCl_3$ d'échantillons de chlore technique, obtenu par électrolyse desdites saumures, qui sont prélevées périodiquement, et, parallèlement aux échantillons de saumure, dans le chlore gazeux sortant des électrolyseurs.

La présente invention concerne également un dispositif automatique de mesure pour mettre en oeuvre ledit procédé.

Il est connu que, pendant l'électrolyse de saumures de NaCl contenant divers halogénures d'ammonium, il se forme des aminés halogénées et, tout particulièrement, du $NCl_3$. Il est maintenant admis que la quasi totalité de $NCl_3$ présent dans le chlore technique provient exclusivement des halogénures d'ammonium contenus dans les saumures NaCl soumises à l'électrolyse.

Le $NCl_3$ est un composé très instable dont la décomposition est accompagnée généralement d'une violente déflagration.

Ainsi, par exemple, lors d'une évaporation de chlore technique préalablement liquéfié pour son stockage et son transport, il peut se produire un enrichissement progressif en $NCl_3$ dans le chlore liquide avec le risque que sa concentration dépasse, au moment de l'évaporation, le seuil d'explosibilité.

Ainsi, de nombreux procédés ont été proposés pour éliminer $NCl_3$ contenu dans le chlore technique (gazeux ou liquide).

Ainsi, dans le brevet US 4,138,296, on décrit un procédé d'élimination de $NCl_3$ contenu dans le chlore provenant de l'électrolyse de saumures qui consiste à condenser partiellement ledit chlore et $NCl_3$, à mélanger le condensât avec un solvant inerte tel que $CCl_4$ ou $CHCl_3$, à éliminer le chlore puis à ajouter un réactif tel que HCl, $Na_2SO_4$ qui convertit $NCl_3$ en $NH_4Cl$.

Le brevet US 2,692,818 décrit un procédé d'élimination de $NCl_3$ contenu dans du $Cl_2$ en faisant passer ledit chlore sur de l'alumine poreuse, finement divisée, couverte de chlorure cuivrique.

Dans le brevet US 2,705,219, le chlore résultant de l'électrolyse de saumures contenant des chlorures d'ammonium est exposé à une radiation actinique de longueur d'onde comprise entre 3 600 Å et 4 785 Å pendant un temps suffisant pour réduire la teneur en $NCl_3$ à une valeur inférieure à 20 ppm.

Le brevet FR 2 721 596 décrit un procédé d'élimination de $NCl_3$ dans le chlore brut par mise en contact du chlore brut avec du charbon actif.

Cependant, il est nécessaire d'avoir une bonne connaissance des teneurs en $NCl_3$ dans le chlore technique à purifier pour utiliser le procédé de purification adéquate.

A cette fin, de nombreuses techniques d'analyse ont été proposées pour analyser le $NCl_3$ dans le chlore.

Parmi ces techniques, on cite la chromatographie en phase gazeuse directe de $NCl_3$ (US 4,087,607) ; la spectroscopie infrarouge après absorption de $NCl_3$ dans un solvant tel que $CCl_4$ (Analytica Chimica Acta, 1984, 156 pages 230 / 231), la spectrophotométrie UV de solutions de $NCl_3$ décrite dans "The absorption spectra of mono-, di- and trichloroamines" par W. CZECH et coll. (Analytical Chemistry, vol. 33, n° 6, 1961, pages 705-707) ; la spectrocolorimétrie de l'ion ammonium résultant de la transformation de $NCl_3$ en $NH_4Cl$ par HCl concentré selon la réaction $NCl_3 + 4HCl \rightarrow NH_4Cl + 3Cl_2$ décrite notamment dans Analytica Chimica Acta, 1984, 156 pages 221-230).

Toutes ces techniques sont effectuées manuellement au laboratoire et interviennent après une prise d'échantillon de chlore technique (gazeux ou liquide) sur le site de production.

Cette façon d'opérer présente de nombreux inconvénients. Le délai de réponse entre le prélèvement et le résultat est long, 12 heures voire plus. En outre, l'échantillon est transporté, voire stocké pendant une durée plus ou moins longue ce qui est de nature à entraîner une incertitude sur la teneur réelle en $NCl_3$ compte tenu de caractère évolutif des chloroamines et, notamment du $NCl_3$.

Il y a donc un besoin important dans l'industrie chlorière de connaître avec précision et rapidement la teneur en $NCl_3$ dans le chlore technique produit par électrolyse de saumures NaCl.

En outre, aucune des méthodes précédemment mentionnées ne prennent en compte la détermination en parallèle de la teneur en $NH_4^+$ présente dans les saumures soumises à électrolyse qui est considéré comme le principal précurseur de $NCl_3$.

Le problème posé est donc de pouvoir contrôler, en semi-continu, directement, sur une unité de production de chlore obtenu par électrolyse de saumures NaCl à la fois le $NCl_3$ contenu dans le chlore technique et $NH_4^+$ présent dans les saumures.

Auger G. et Dube G. (Adv. Autom. Anal., Technicon Int. Congr. 7th 1976 (Publ. 1977) 2. 99-107) décrivent une méthode de laboratoire de détermination automatique de l'ammoniaque et des nitrates contenus dans le sel gemme et les saumures et $NCl_3$ dans le chlore.

Cette méthode présente l'inconvénient, notamment, de nécessiter une distillation alcaline préalable des saumures lorsque celle-ci contiennent des niveaux élevés de sels. La technique et le matériel utilisés ne permettent pas directement l'analyse des échantillons de chlore qui doit être prélevé et traité manuellement avec les inconvénients déjà mentionnés précédemment pour d'autres techniques.

Un premier objet de la présente invention est donc de fournir un procédé fiable pour déterminer, automatiquement et directement sur une unité de production de chlore à la fois la teneur en ion $NH_4^+$ dans les saumures de NaCl et la teneur en $NCl_3$ dans le chlore produit en utilisant la spectrocolorimétrie de l'ion ammonium.

Un autre objet de la présente invention concerne un dispositif automatique pour la mise en oeuvre dudit procédé ; ledit dispositif permettant de prélever automatiquement et périodiquement à la fois des échantillons de saumures de NaCl, contenant des ions $NH_4^+$ et des échantillons de chlore contenant $NCl_3$, ledit chlore étant obtenu par électrolyse des saumures, et de mesurer automatiquement la teneur en $NH_4^+$ dans les saumures, et la teneur en $NCl_3$ dans le chlore.

On a maintenant trouvé un procédé pour déterminer automatiquement et directement la teneur en ion ammonium ($NH_4^+$) contenu dans des saumures et le trichlorure d'azote ($NCl_3$) présent dans le chlore technique gazeux obtenu par électrolyse desdites saumures ; ledit procédé est caractérisé en ce qu'il consiste :

a) à prélever en continu une quantité d'échantillon de chlore technique gazeux contenant du $NCl_3$, directement sur la sortie des électrolyseurs, à l'acheminer vers une enceinte de transformation contenant une quantité prédéterminée d'une solution aqueuse d'HCl pur, et renouvelée à chaque analyse et de faire barboter ladite quantité de chlore dans ladite solution pendant une durée au moins égale à 15 minutes et de préférence comprise entre 1 heure et 4 heures, à une température comprise entre à 10°C et 40 °C et, de préférence comprise entre 10°C et 20°C ;

b) parallèlement, à prélever un échantillon de saumure NaCl, contenant des ions $NH_4^+$, à l'introduire dans une cuve réactionnelle et de mesure, puis à introduire dans ladite cuve, sous agitation, les réactifs suivants :

① une solution aqueuse de tampon alcalin contenant éventuellement un correcteur d'interférence,
② une solution aqueuse contenant un composé aromatique hydroxylé et un exaltant de coloration,
③ une solution aqueuse d'un composé précurseur d'ion ClO⁻,

à mettre en contact ladite quantité prélevée de saumure avec les réactifs précédemment introduits pendant une durée comprise entre 5 minutes et 30 minutes et, de préférence, comprise entre 10 et 20 minutes, à une température comprise entre 35°C et 50°C et, de préférence voisine de 40°C, puis à mesurer la densité optique du composé coloré obtenu à une longueur d'onde λ égale à 650 nm et en déduire la concentration en $NH_4^+$ dans la saumure,
c) à stopper le barbotage de chlore dans l'enceinte de transformation ;
d) à stripper le chlore (en excès et formé) de ladite solution acide au moyen d'un gaz inerte ; pendant une durée au moins égale à 15 minutes ;
e) à ramener éventuellement à un volume connu par de l'eau pure, et à homogénéiser le milieu avec un gaz inerte ;
f) puis, après avoir vidé et rincé la cuve réactionnelle et de mesure dans laquelle on a déterminé la teneur en $NH_4^+$ de la saumure - étape b)-, à injecter dans ladite cuve une quantité volumique de la solution obtenue en d) ou e) identique à celle utilisée en b), et comprise entre 0,5 et 5 ml ;
g) à neutraliser cette quantité avec une solution aqueuse d'un hydroxyde alcalin pour obtenir un pH compris entre 3 et 7, et, de préférence, voisin de 4, puis,
h) à introduire comme dans l'étape b) les réactifs ① , ② et ③ , puis faire réagir dans les mêmes conditions que dans l'étape b), mesurer la densité optique du composé obtenu à une longueur d'onde λ identique à celle utilisée en b) et déterminer la teneur en $NCl_3$ à partir de la quantité de $NH_4^+$ mesurée ;
i) à vider et à rincer respectivement l'enceinte de transformation et la cuve réactionnelle et de mesure au moyen d'eau pure ;
j) puis à introduire dans l'enceinte de transformation une solution aqueuse d'HCl ; et,
k) à recommencer les opérations a) à j) précédentes selon une fréquence déterminée.

Le procédé de la présente invention permet de déterminer avec une grande précision des quantités pondérales de $NCl_3$ dans le chlore gazeux technique lesquelles peuvent varier dans une large mesure et rapidement. Dans l'industrie chlorière, la teneur en $NCl_3$ dans le chlore technique peut aller de 0,1 ppm à 100 ppm et peut atteindre quelques centaines de ppm voire plus.

Selon la présente invention, les réactifs sont introduits successivement dans l'ordre ① , ② et ③ . Avantageusement, les réactifs ① et ② peuvent être introduits séparément et simultanément.

Le chlore gazeux est prélevé directement sur les sorties des électrolyseurs puis ensuite délivré à l'enceinte de transformation à un débit compris entre 10 l/h et 13 l/h sous une pression comprise entre 0,05 et 0,2 bar.

Selon la présente invention, on fait barboter le chlore gazeux prélevé, éventuellement partiellement dévésiculé et séché, dans une enceinte de transformation contenant une quantité prédéterminée d'une solution aqueuse d'acide chlorhydrique pur.

Compte tenu de la concentration élevée de solution d'HCl utilisée, la quantité d'HCl est en très large excès par rapport à la quantité stoechiométrique nécessaire pour transformer quantitativement $NCl_3$ en $NH_4Cl$ suivant la réaction :

$$NCl_3 + 4HCl \rightarrow NH_4Cl + 3Cl_2$$

La concentraiton pondérale en HCl des solutions aqueuses d'HCl pur est généralement comprise entre 20 % et 40 % et, de préférence, voisine de 33 %. Ces solutions doivent être exemptes d'ions $NH_4^+$.

Selon la présente invention, la détermination de $NH_4^+$, provenant directement des saumures ou indirectement de $NCl_3$ préalablement transformé en $NH_4^+$, est réalisée par spectrocolorimétrie d'un composé coloré, type "indophénol", obtenu selon la réaction dite de Berthelot qui consiste à faire réagir l'ion $NH_4^+$ en milieu alcalin et oxydant avec un composé aromatique hydroxylé.

A titre d'illustration de composés aromatiques hydroxylés utilisables selon la présente invention, on citera le phénol, et tout particulièrement l'acide salicylique beaucoup moins toxique. Ces composés sont avantageusement utilisés sous forme de sels de sodium.

Le milieu oxydant est obtenu au moyen d'un précurseur d'ions $ClO^-$.

A titre d'illustration de tels précurseurs utilisables selon la présente invention, on citera l'hypochlorite de sodium (eau de Javel), le dichloroisocyanurate de sodium. ,

Selon la présente invention, la solution aqueuse de tampon alcalin contient un hydroxyde alcalin (NaOH, KOH) et un halogénure alcalin (NaCl, KCl) de façon à maintenir un pH alcalin de préférence compris entre 11,8 et 12,6.

Afin d'exalter la coloration du composé indophénolique, on utilise un exaltant de coloration tel que le nitroprussiate de sodium.

Afin d'éviter une éventuelle précipitation avec solution alcaline due notamment aux éventuelles impuretés contenues dans les saumures, on ajoute de préférence avant la réaction un correcteur d'interférence tel que le citrate de sodium ou le tartrate de sodium.

Ce composé peut être ajouté avantageusement dans la solution aqueuse du tampon alcalin (réactif ① ).

Selon la présente invention, on effectue avantageusement une mesure d'absorption sur l'eau de dilution contenant soit les saumures, soit la solution aqueuse d'HCl provenant de l'enceinte de transformation, sans les réactifs. Ceci permet de corriger toute dérive éventuelle pouvant provenir notamment des salissures des cuves et des conduites.

Le procédé selon l'invention présente l'avantage de pouvoir déterminer la teneur en ions $NH_4^+$ des saumures alimentant l'électrolyseur et ceci en liaison directe avec $NCl_3$ formé et présent dans le chlore technique et gazeux.

Un autre avantage de la présente invention est de pouvoir déterminer la teneur en $NCl_3$ dans du chlore technique liquide. Dans cette éventualité, le chlore liquide doit être transformé en chlore gazeux par des moyens connus de l'homme du métier.

La périodicité des prélèvements des échantillons à la fois de saumure et de chlore gazeux dans le temps et donc des déterminations de $NH_4^+$ dans les saumures et $NCl_3$ dans le chlore peut varier dans une large mesure.

Ainsi, on peut effectuer 1, 2 ou 3 déterminations de $NCl_3$ dans le chlore par cycle de 8 heures et 2 à 4 déterminations de $NH_4^+$ dans les saumures entre chaque détermination de $NCl_3$.

On peut également effectuer un étalonnage périodique avec des solutions aqueuses de NaCl (supra-pur et exempt de $NH_4^+$) contenant des quantités connues de $NH_4^+$, telle que la teneur en NaCl dans la cuve réactionnelle et de mesure soit comparable à celle rencontrée au cours de l'analyse de la saumure. Ceci est avantageusement effectué lorsque l'on utilise de nouvelles solutions des réactifs ① , ② et ③ .

Un autre objet de la présente invention concerne un dispositif pour mettre en oeuvre le procédé précédemment décrit.

Ledit dispositif permet de prélever automatiquement, sur une unité de production de chlore gazeux obtenu par électrolyse de saumures NaCl, des échantillons desdites saumures contenant des ions $NH_4^+$, et des échantillons de chlore gazeux technique contenant des quantités de $NCl_3$ pouvant s'échelonner de 0,1 ppm à plusieurs centaines de ppm, et de mesurer automatiquement par spectrocolorimétrie, les teneurs respectives des ions $NH_4^+$ provenant de la saumure ou du $NCl_3$ dans le chlore.

Le dispositif selon la présente invention comprend :

■ une enceinte de transformation dans laquelle $NCl_3$ contenu dans le chlore gazeux est transformé en $NH_4Cl$ par contact avec une solution aqueuse d'HCl pur, ladite enceinte étant munie de moyens d'alimentation et de diffusion des gaz ($Cl_2$, $N_2$, ...), de moyens d'alimentation en solutions aqueuses d'HCl pur, de moyens d'alimentation en eau de dilution, de moyens de détection de niveaux, de moyens d'élimination des évents et des solutions usagées, de moyens de prélèvement de la solution contenant les ions $NH_4^+$ provenant de la transformation de $NCl_3$ et éventuellement de moyens de maintien en température ;

■ une cuve réactionnelle et de mesure dans laquelle s'effectue d'abord la transformation des ions $NH_4^+$ en un composé coloré et ensuite la mesure de la densité optique dudit composé coloré ; ladite cuve, de forme cylindrique, sensiblement verticale, est munie de deux fenêtres diamétralement opposées et mobiles, de moyens permettant de mouvoir lesdites fenêtres, de moyens d'agitation, de moyens de chauffage, de moyens de mesure de la densité optique du composé coloré formé en solution aqueuse située entre les 2 fenêtres distantes d'une longueur L, de moyens de mesure de pH, de moyens d'alimentation en réactifs, de moyens d'alimentation en saumure et solution provenant de l'enceinte de transformation, de moyens de vidange et de moyens de rinçage ;

■ des moyens de stockage des différents réactifs utilisés dans l'enceinte de transformation et dans la cuve réactionnelle et de mesure,

■ une unité microprocesseur de programmation cyclique qui commande successivement au cours de chaque cycle d'analyse des ions $NH_4^+$ provenant de la saumure ou de $NCl_3$ du chlore :

  - des moyens pour prélever directement sur la sortie chlore des électrolyseurs et pour amener dans l'enceinte de transformation une quantité déterminée de chlore technique gazeux ;
  - des moyens pour prélever directement une quantité déterminée de saumure alimentant les électrolyseurs et pour l'amener dans la cuve réactionnelle et de mesure ;
  - des moyens permettant la manoeuvre séquentielle des différents organes (pompes, vannes pneumatiques) injectant ou délivrant à partir des moyens de stockage des quantités déterminées des réactifs dans l'enceinte de transformation et dans la cuve réactionnelle et de mesure ;
  - des moyens de transfert d'une quantité déterminée d'une solution aqueuse acide contenant des ions $NH_4^+$ provenant de la transformation de $NCl_3$ de l'enceinte de transformation vers la cuve réactionnelle et de mesure ;
  - des moyens pour exprimer la densité optique du composé coloré en solution aqueuse contenue dans la cuve de mesure et pour la transformer en termes de concentration d'ions $NH_4^+$ dans les saumures et en teneur $NCl_3$ dans le chlore ;
  - des moyens de vidange et de rinçage respectivement de l'enceinte de transformation et de la cuve réactionnelle et de mesure ;
  - des moyens pour vider entièrement les circuits de prélèvements, entre 2 prises d'échantillon de saumure et/ou de chlore gazeux ;
  - des moyens d'étalonnage, et
  - des moyens d'enregistrement et d'affichage.

Le dispositif selon la présente invention présente l'avantage de fonctionner par mesure sur des prélèvements successifs, ce qui permet d'avoir les valeurs précises de la teneur en $NH_4^+$ dans la saumure correspondant exactement à la teneur moyenne en $NCl_3$ du chlore prélevé pendant la même période.

Le dispositif selon l'invention permet de mesurer avec précision des teneurs très faibles, inférieures au ppm, de $NCl_3$ dans le chlore gazeux.

Le dispositif de l'invention présente également l'avantage de prendre en charge la détermination de l'ion $NH_4^+$ dans les saumures NaCl alimentant les électrolyseurs, et ceci en liaison directe avec $NCl_3$ formé à partir de $NH_4^+$.

Ce point est très important pour les chloriers car il permet d'améliorer l'étude dynamique des paramètres, tels que température, pH, concentration des ions $NH_4^+$ dans les saumures, intensité du courant qui sont liés à la formation de $NCl_3$ à partir de $NH_4^+$.

Cela permet également de vérifier l'efficacité des traitements éventuellement effectués sur les saumures pour abaisser leur teneur en ion $NH_4^+$.

L'invention est maintenant illustrée par un exemple de réalisation donné à titre indicatif.

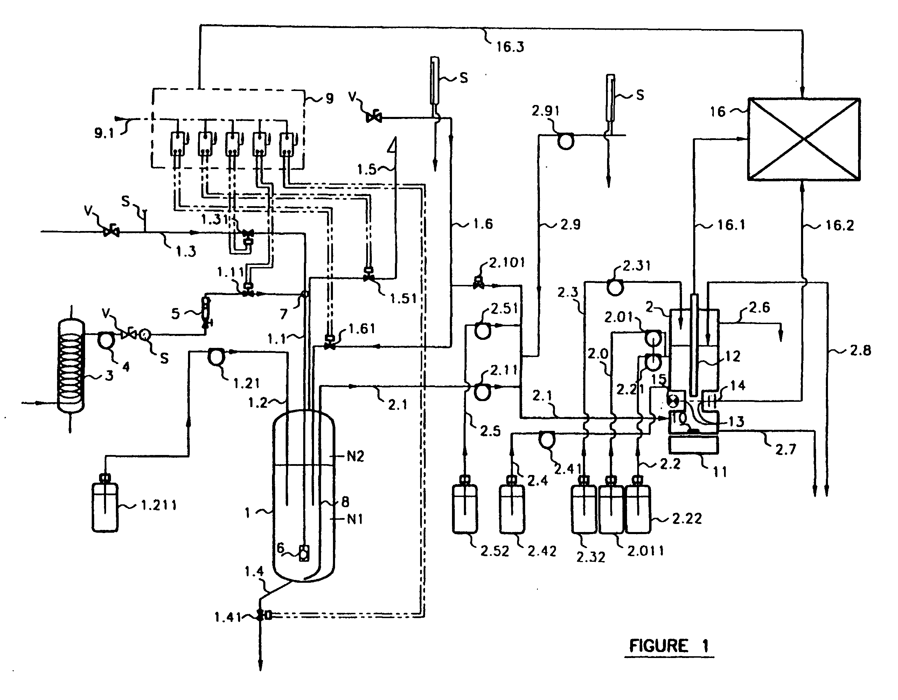

La figure 1 représente un schéma du dispositif permettant de mettre en oeuvre le procédé.

Sur cette figure, 1 représente l'enceinte de transformation, 2 la cuve réactionnelle et de mesure et 16 l'unité microprocesseur qui permet de gérer l'automaticité du dispositif.

Cette unité microprocesseur est constituée par des éléments électriques, électroniques, de calcul, etc. , connus des techniciens, qui sont couramment utilisés dans le domaine de l'automatisation et qu'il est inutile de décrire en détail, car ils ne constituent pas en eux-mêmes l'invention.

L'enceinte 1 est constituée par un tube de forme cylindrique et verticale de 60 ml.

Elle est alimentée en solution aqueuse d'HCl pur ayant une concentration pondérale en HCl comprise entre 20 % et 40 % provenant d'un stockage 1.211, par la conduite 1.2, munie d'une pompe péristaltique 1.21.

Le chlore gazeux est prélevé directement sur la tuyauterie de sortie de chlore des électrolyseurs non, représentés sur la figure 1 et est acheminé vers l'enceinte 1 par la conduite 1.1 munie successivement d'un réfrigérant à eau 3 (condenseur), d'une pompe 4, d'une vanne d'arrêt V, d'une sécurité S, d'un débimètre 5 et d'une vanne pneumatique 1.11. Cette conduite 1.1 entre dans l'enceinte 1 et plonge pratiquement jusqu'au fond de ladite enceinte et est terminée par une partie frittée 6.

L'enceinte 1 comporte également une conduite de rejets 1.4 munie d'une vanne pneumatique 1.41, d'une conduite 1.5 munie d'une vanne pneumatique 1.51 pour les évents raccordée à une garde hydraulique (non représentée), d'une conduite 1.3 munie d'une vanne d'arrêt V, d'une sécurité S, d'une vanne pneumatique 1.31 pour l'azote, cette conduite étant raccordée à la conduite 1.1 par un tés 7, d'une conduite 1.6 munie d'une vanne d'arrêt V, d'une sécurité S, d'une vanne pneumatique 1.61 d'amenée d'eau d'appoint et de rinçage, de détecteurs optiques des niveaux N1 et N2 et d'un tube 8 plongeant jusqu'au fond de l'enceinte 1, et raccordé à la conduite 2.1, laquelle permet de transférer, de ladite enceinte 1, un prélèvement du milieu réactionnel contenant les ions $NH_4^+$ provenant de la transformation de $NCl_3$ par HCl, dans la cuve réactionnelle et de mesure 2.

Cette conduite 2.1 est munie d'une pompe péristaltique 2.11.

Un coffret distributeur 9 relié à l'unité microprocesseur 16 par la liaison 16.3 est alimenté en air comprimé par la conduite 9.1 et permet de commander automatiquement les vannes pneumatiques 1.11, 1.31, 1.41, 1.51 et 1.61 (les circuits électriques reliant le coffret distributeur 9 aux différentes vannes sont représentés par des double-traits en pointillés).

La cuve réactionnelle et de mesure 2, ci-après cuve 2, constituée d'un cylindre en titane de 30 mm de diamètre et ayant un volume total de 30 ml est munie de moyens de chauffage (non représentés sur la figure 1), d'un agitateur magnétique 10 mis en mouvement par un moteur 11, d'une électrode de mesure de pH 12 relié à 16 par la voie 16.1, de deux fenêtres 13 en verre, diamétralement opposées et pouvant être déplacées par des moyens non représentés sur la figure, de façon à obtenir à l'intérieur de la cuve 2 une épaisseur L variable de solution (lame d'eau), allant de 2 mm à une longueur au plus égale au diamètre de la cuve 2, de moyens de mesure de la densité optique du composé coloré en solution aqueuse constitués par une diode émettrice 14 et par une cellule photosensible 15 reliées à 16 par la voie 16.2.

Cette cuve 2 est alimentée à partir du stockage 2.22 et par la conduite 2.2 munie d'une pompe péristaltique 2.21, en solution aqueuse de tampon alcalin pouvant contenir :

- de 30 g/l à 40 g/l de NaOH,
- de 30 g/l à 40 g/l de KCl, et
- éventuellement une quantité allant de 8 g/l à 12 g/l de correcteur d'interférence (tartrate de potassium tétrahydrate ou citrate de sodium) ;

à partir du stockage 2.011 et par la conduite 2.0 munie d'une pompte péristaltique 2.01 raccordée à l'entrée de la cuve sur la conduite 2.2, en une solution aqueuse pouvant contenir :

- de 290 g/l à 310 g/l de salicylate de sodium,
- de 1,90 g/l à 2,10 g/l de nitroprussiate de sodium ;

à partir d'un stockage 2.32 et par la conduite 2.3 munie d'une pompe péristaltique 2.31, en solution aqueuse pouvant contenir :

- de 3,80 g/l à 4,20 g/l de dichloroisocyanurate de sodium ;

à partir d'un stockage 2.42 et par la conduite 2.4 munie d'une pompe péristaltique 2.41 en solution aqueuse d'hydroxyde de sodium pouvant contenir :

- de 280 g/l à 320 g/l de NaOH ;

à partir d'un stockage 2.52 et par la conduite 2.5 munie d'une pompe péristaltique 2.51, en une solution aqueuse d'étalonnage ayant une concentration déterminée en $NH_4^+$.

Avantageusement, les réactifs des solutions 2.22 et 2.011 peuvent être mélangés dans une solution unique.

Les deux corps des pompes 2.01 et 2.21 sont avantageusement entraînés par le même moteur.

La cuve 2 est également munie d'un trop plein 2.6 et de conduites de vidange 2.7 et 2.8.

La saumure est prélevée sur des bacs de stockage ou sur les conduites de saumures NaCl alimentant les électrolyseurs et est acheminée à la cuve 2 par la conduite 2.9, munie d'une sécurité S, d'une pompe péristaltique 2.91. Cette conduite est raccordée à la conduite 2.1. La conduite 1.6, permettant d'introduire de l'eau d'appoint (ou de rinçage) dans l'enceinte 1, permet également d'introduire de l'eau dans la cuve 2 via une conduite 2.10, munie d'une électrovanne 2.101, qui se raccorde à la conduite 2.1.

Les pompes péristaltiques 2.01, 2.21, 2.31, 2.41, 2.51, 2.91, les électrovannes 2.101, 1.11, 1.31, 1.41, 1.51, 1.61 (connexions 16.3), le spectrocolorimètre (voie 16.2 : diode émettrice et cellule photosensible), la mesure de pH (voie 16.1 : électrode de pH), l'agitation, le chauffage (non représenté), la pompe 4, le décimètre 5, sont reliés, commandés et traités automatiquement par l'unité microprocesseur 16.

Ci-après nous décrivons un exemple pratique réalisé à partir du dispositif décrit précédemment.

Cet exemple a été réalisé sur une unité industrielle de production de chlore par électrolyse d'une solution de saumure non traitée à environ 300 g/l de NaCl. Le chlore technique produit peut contenir de 2 à 5 ppm de $NCl_3$ dans des conditions nomales de fonctionnement. Dans l'enceinte 1 contenant 30 ml d'une solution aqueuse d'HCl pur à 33 %, délivrés automatiquement à partir du stockage 1.211 par la conduite 1.2 munie d'une pompe 1.21, on fait barboter pendant 4 heures, à un débit de 12,5 l/h et sous une pression de 0,1 bar du chlore provenant d'une tuyauterie de sortie de chlore des électrolyseurs. Ce chlore, après avoir été refroidi en 3, est introduit dans l'enceinte 1 par la conduite 1.1 et dispersé dans la solution d'HCl par la fritté 6.

Pendant le temps de barbotage du chlore dans la solution aqueuse d'HCl, qui a pour but de transformer $NCl_3$ contenu dans ledit chlore en $NH_4Cl$ ; on effectue une analyse sur la saumure de NaCl qui n'a subi aucun traitement d'élimination des halogénures d'ammonium. Cette saumure peut contenir de 3 à 6 mg/l d'ions $NH_4^+$ par litre.

Il est entendu que les circuits de prélèvement et les conduites d'alimentation de la cuve 2 en saumure ont été préalablement rincés.

Dans la cuve 2 dans laquelle la distance L entre les 2 fenêtres 13 a été réglée à 6 mm par des moyens non représentés sur la figure 1 et contenant un volume de 20 ml d'eau pure, ajusté après rinçage (dispositif non représenté), on introduit un prélèvement de 1 ml de saumure effectué dans la conduite alimentant les électrolyseurs.

Ensuite, on porte le contenu de la cuve 2 à 40°C. Cette température sera maintenue pendant toute la durée de réaction de formation du composé coloré et de la mesure de la concentration en ions $NH_4^+$.

Puis, on introduit, sous agitation, successivement et par les moyens décrits précédemment :

- 1,25 ml d'une solution aqueuse de tampon alcalin, contenant 30 g/l de NaOH et 31 g/l de KCl ainsi que 10 g/l de citrate de sodium (correcteur d'interférence),
- 1,25 ml d'une solution, aqueuse contenant 300 g/l de salicylate de sodium et 2 g/l de nitroprussiate de sodium,
- 1,25 ml d'une solution aqueuse contenant 4 g/l de dichloroisacyanurate de sodium ;

Les pompes péristaltiques 2.01, 2.21, 2.31 délivrent 0,25 ml par tour pendant 20 secondes à une vitesse de rotation de 15 tours par minute.

Le composé indophénolique de coloration bleu-vert, est obtenu après 15 minutes de réaction après la fin d'addition du dichloroisocyanurate de sodium. On détermine la densité optique dudit composé indophénolique en solution aqueuse au moyen d'un spectrocolorimètre constitué par la diode émettrice 14 et la cellule photosensible 15 à une longueur d'onde λ de 650 nm.

L'information est transmise par la voie 16.2 à l'unité microprocesseur 16 qui calcule et affiche le résultat.

La concentration en ion $NH_4^+$ dans la saumure NaCl est en moyenne de 4,5 mg/l.

La durée totale de réaction et de mesure est de 25 minutes.

La cuve 2 est vidangée par la conduite 2.7, rincée puis à nouveau vidangée.

Revenons à l'enceinte 1.

Après les 4 heures de barbotage de chlore, ce qui représente une quantité pondérale de chlore de 150 g, on arrête le barbotage, puis on strippe l'excès de chlore contenu dans la solution HCl par un courant d'azote délivré via la conduite 1.3 munie d'une vanne pneumatique 1.31 puis la conduite 1.1 (à partir du tès 7).

On maintient le courant d'azote pendant 15 minutes à un débit de 10 à 15 l/h. L'azote étant éliminé par la conduite 1.5. On complète ensuite le volume du milieu réactionnel à 50 ml (niveau N2) par de l'eau introduite par la conduite 1.6 munie d'une vanne pneumatique 1.61. On homogénéise 30 secondes au moyen d'un courant d'azote.

On effectue le rinçage du tube 8 et de la ligne 2.1 via la pompe péristaltique 2.11 pendant 1 minute de façon à renouveler complètement leur volume vers la cuve 2 qui est en rinçage continu par la ligne 1.6 (vanne 2.101 ouverte) et en vidange par la ligne 2.7.

Après arrêt du rinçage (arrêt 2.11 et fermeture 2.101) le volume d'eau pure dans la cuve est ajusté à 20 ml (dispositif non représenté).

Ensuite, on effectue un prélèvement de 1 ml de la solution aqueuse HCl contenant des ions NH4⁺, provenant du $NCl_3$ transformé, et on l'introduit dans la cuve 2 par le tube 8 en liaison avec la conduite 2.1 munie de la pompe péristaltique 2.11. La pompe péristaltique 2.11 délivre 0,25 ml par tour pendant 16 secondes à une vitesse de rotation de 15 tours par minute.

Ensuite, on neutralise à pH 4 par injection d'une solution aqueuse de soude à 300 g/l provenant d'un stockage 2.42, via la conduite 2.4 munie d'une pompe péristaltique 2.41. La pompe péristaltique 2.41 délivre 0,25 ml par tour jusqu'à la fin de la neutralisation à une vitesse de rotation de 15 tours par minute.

Le pH atteint (l'information est transmise automatiquement à l'unité microprocesseur 16 via la voie 16.1) on met en route le cycle de réaction et de mesure qui est identique à celui de la détermination d'ion ammonium dans les saumures précédemment décrites, c'est-à-dire : même température, mêmes quantités de réactifs, détermination de la densité optique exactement après un temps identique après la fin d'addition du dichloroisocyanurate de sodium (c'est-à-dire après le même temps de réaction). L'information est transmise à l'unité microprocesseur 16 qui effectue la transformation de la concentration des ions $NH_4^+$ en une teneur en $NCl_3$.

La teneur en $NCl_3$ dans le chlore technique gazeux produit est en moyenne de 2 mg/kg.

La cuve 2, comme précédemment est vidée et rincée.

L'étalonnage du dispositif peut être effectuée périodiquement, notamment lorsque les solutions de réactifs sont renouvelées, ce qui nécessite en plus de déterminer l'essai à blanc des réactifs.

A cet effet, on programme sur l'unité microprocesseur 16 un cycle étalonnage, qui peut être effectué par exemple lors du temps de barbotage du chlore dans la solution aqueuse d'HCl dans l'enceinte 1.

On introduit dans la cuve 2 contenant 20 ml d'eau, 1 ml d'une solution d'étalonnage contenant 5 mg/l d'ions $NH_4^+$, provenant du stockage 2.52 via la conduite 2.5 muni d'une pompe 2.51. La pompe péristaltique 2.51 délivre 0,25 ml par tour pendant 16 secondes à une vitesse de rotation de 15 tours par minute.

Ensuite, on applique exactement le même protocole décrit précédemment pour la mesure de l'ion $NH_4^+$ dans les saumures.

Sans sortir du cadre de la présente invention, les divers éléments constitutifs du dispositif qui vient d'être décrit à titre d'exemple pourront être remplacés par des éléments équivalents.

**Revendications**

1. Procédé pour déterminer automatiquement et directement la teneur en ion ammonium ($NH_4^+$) contenu dans des saumures et le trichlorure d'azote ($NCl_3$) présent dans le chlore technique gazeux obtenu par électrolyse desdites saumures : ledit procédé est **caractérisé en ce qu'**il consiste :

a) à prélever en continu une quantité d'échantillon de chlore technique gazeux contenant du $NCl_3$, directement sur la sortie des électrolyseurs, à l'acheminer vers une enceinte de transformation contenant une quantité prédéterminée d'une solution aqueuse d'HCl pur, et renouvelée à chaque analyse et de faire barboter ladite quantité de chlore dans ladite solution pendant une durée au moins égale à 15 minutes à une température comprise entre 10°C et 40 °C ;
b) parallèlement, à prélever un échantillon de saumure NaCl, contenant des ions $NH_4^+$, à l'introduire dans une cuve réactionnelle et de mesure, puis à introduire dans ladite cuve, sous agitation, les réactifs suivants :

① une solution aqueuse de tampon alcalin contenant éventuellement un correcteur d'interférence,
② une solution aqueuse contenant un composé aromatique hydroxylé et un exaltant de coloration,
③ une solution aqueuse d'un composé précurseur d'ion ClO⁻,

à mettre en contact ladite quantité prélevée de saumure avec les réactifs précédemment introduits pendant une durée comprise entre 5 minutes et 30 minutes, à une température comprise entre 35°C et 50°C, puis à mesurer la densité optique du composé coloré obtenu à une longueur d'onde $\lambda$ égale à 650 nm et en déduire la concentration en $NH_4^+$ dans la saumure,
c) à stopper le barbotage de chlore dans l'enceinte de transformation ;
d) à stripper le chlore de ladite solution acide au moyen d'un gaz inerte, pendant une durée au moins égale à 15 minutes ;
e) à ramener éventuellement à un volume connu par de l'eau pure, et à homogénéiser le milieu avec un gaz inerte ;
f) puis, après avoir vidé et rincé la cuve réactionnelle et de mesure dans laquelle on a déterminé la teneur en $NH_4^+$ de la saumure - étape b)-, à injecter dans ladite cuve une quantité volumique de la solution obtenue en d) ou e) identique à celle utilisée en b), et comprise entre 0,5 et 5 ml ;
g) à neutraliser cette quantité avec une solution aqueuse d'un hydroxyde alcalin pour obtenir un pH compris entre 3 et 7, puis,
h) à introduire comme dans l'étape b) les réactifs ① , ② et ③ , puis faire réagir dans les mêmes conditions que dans l'étape b), mesurer la densité optique du composé obtenu à une longueur d'onde $\lambda$ identique à celle utilisée en b) et déterminer la teneur en $NCl_3$ à partir de la quantité de $NH_4^+$ mesurée ;
i) à vider et à rincer respectivement l'enceinte de transformation et la cuve réactionnelle et de mesure au moyen d'eau pure ;
j) puis à introduire dans l'enceinte de transformation une solution aqueuse d'HCl ;
k) à recommencer les opérations a) à j) précédentes.

2. Procédé selon la revendication 1, **caractérisé en ce que** dans l'étape a), on fait barboter la quantité de chlore dans la solution aqueuse d'HCl pur pendant une durée comprise entre 1 heure et 4 heures, à une température comprise entre 10°C et 20°C.

3. Procédé selon la revendication 1 **caractérisé en ce que** la concentration pondérale en HCl des solutions aqueuses d'HCl pur est comprise entre 20 % et 40 %.

4. Procédé selon la revendication 1, **caractérisé en ce que** dans l'étape b), on met en contact la quantité prélevée de saumure avec les réactifs ① , ② et ③ pendant une durée comprise entre 10 minutes et 20 minutes, à une température voisine de 40°C.

5. Procédé selon la revendication 1, **caractérisé en ce que** dans l'étape g), le pH est voisin de 4.

6. Procédé selon la revendication 1, **caractérisé en ce que** le composé aromatique hydroxylé est l'acide salicylique sous forme de sel de sodium.

7. Procédé selon la revendication 6, **caractérisé en ce que** la concentration en salicylate de sodium dans la solution aqueuse ② est comprise entre 290 g/l et 310 g/l.

8. Procédé selon la revendication 1, **caractérisé en ce que** le composé précurseur d'ions ClO- est le dichloroisocyanurate de sodium.

9. Procédé selon l'une des revendications 1 et 8, **ca-**

**ractérisé en ce que** la concentration en dichloroisocyanurate de sodium dans la solution aqueuse ③ est comprise entre 3,80 g/l et 4,20 g/l.

10. Procédé selon la revendication 1, **caractérisé en ce que** le correcteur d'interférence est le citrate de sodium.

11. Procédé selon l'une des revendications 1 et 10, **caractérisé en ce que** la concentration en correcteur d'interférence dans la solution aqueuse ① est comprise entre 8 g/l et 12 g/l.

12. Procédé selon la revendication 1, **caractérisé en ce que** l'exaltant de coloration est le nitroprussiate de sodium.

13. Procédé selon l'une des revendications 1 et 12, **caractérisé en ce que** la concentration en exaltant de coloration dans la solution aqueuse ② est comprise entre 1,90 g/l et 2,10 g/l.

14. Procédé selon la revendication 1, **caractérisé en ce que** la solution aqueuse de tampon alcalin contient un hydroxyde alcalin et un halogénure alcalin.

15. Procédé selon l'une des revendications 1 et 14, **caractérisé en ce que**, dans la solution aqueuse de tampon alcalin, la concentration en hydroxyde alcalin est comprise entre de 30 g/l et 40 g/l et que la concentration en halogénure alcalin est comprise entre de 30 g/l et 40 g/l.

16. Dispositif pour mettre en oeuvre le procédé selon l'une des revendications 1 à 15, **caractérisé en ce qu'**il comprend :

   - ■ une enceinte de transformation (1) dans laquelle NCl$_3$ contenu dans le chlore gazeux est transformé en NH$_4$Cl par contact avec une solution aqueuse d'HCl pur, ladite enceinte étant munie de moyens d'alimentation et de diffusion des gaz (Cl$_2$, N$_2$, ...), de moyens d'alimentation en solutions aqueuses d'HCl pur, de moyens d'alimentation en eau de dilution, de moyens de détection de niveaux, de moyens d'élimination des évents et des solutions usagées, de moyens de prélèvement de la solution contenant les ions NH$_4$⁺ provenant de la transformation de NCl$_3$ et éventuellement de moyens de maintien en température, ;
   - ■ une cuve réactionnelle et de mesure (2) dans laquelle s'effectue d'abord la transformation des ions NH$_4$⁺ en un composé coloré et ensuite la mesure de la densité optique dudit composé coloré ; ladite cuve, de forme cylindrique, sensiblement verticale, est munie de deux fenêtres (13) diamétralement opposées et mobiles, de moyens permettant de mouvoir lesdites fenêtres, de moyens d'agitation (10), de moyens de chauffage, de moyens de mesure de la densité optique du composé coloré formé en solution aqueuse située entre les 2 fenêtres distantes d'une longueur L, de moyens de mesure de pH (14); de moyens d'alimentation en réactifs, de moyens d'alimentation en saumure et solution provenant de l'enceinte de transformation, de moyens de vidange et de moyens de rinçage ;

   - ■ des moyens de stockage des différents réactifs utilisés dans l'enceinte de transformation et dans la cuve réactionnelle et de mesure,
   - ■ une unité microprocesseur de programmation cyclique qui commande successivement au cours de chaque cycle d'analyse des ions NH$_4$⁺ provenant de la saumure ou de NCl$_3$ du chlore :

      - des moyens pour prélever directement sur la sortie de chlore des électrolyseurs et pour amener dans l'enceinte de transformation une quantité déterminée de chlore technique gazeux ;
      - des moyens pour prélever directement une quantité déterminée de saumure alimentant les électrolyseurs et pour l'amener dans la cuve réactionnelle et de mesure ;
      - des moyens permettant la manoeuvre séquentielle des différents organes (pompes, vannes pneumatiques) injectant ou délivrant à partir des moyens de stockage des quantités déterminées des réactifs dans l'enceinte de transformation et dans la cuve réactionnelle et de mesure ;
      - des moyens de transfert d'une quantité déterminée d'une solution aqueuse acide contenant des ions NH$_4$⁺ provenant de la transformation de NCl$_3$ de l'enceinte de transformation vers la cuve réactionnelle et de mesure ;
      - des moyens pour exprimer la densité optique du composé coloré en solution aqueuse contenue dans la cuve de mesure et pour la transformer en termes de concentration d'ions NH$_4$⁺ dans les saumures et en teneur NCl$_3$ dans le chlore ;
      - des moyens de vidange et de rinçage respectivement de l'enceinte de transformation et de la cuve réactionnelle et de mesure ;
      - des moyens pour vider entièrement les circuits de prélèvements, entre 2 prises d'échantillon de saumure et/ou de chlore gazeux ;
      - des moyens d'étalonnage, et
      - des moyens d'enregistrement et d'affichage.

**17.** Dispositif selon la revendication 16, **caractérisé en ce que** la distance (L) entre les deux fenêtres (13) de la cuve réactionnelle et de mesure est égale à 6 mm.

**18.** Dispositif selon la revendication 15, **caractérisé en ce que** les moyens de mesure de la densité optique du composé coloré formé en solution aqueuse sont constitués d'une diode émettrice (14) et d'une cellule photosensible (15), reliés à l'unité microprocesseur (16) par la voie (16.2).

**Claims**

**1.** Method for automatically and directly determining the content of ammonium ion ($NH_4^+$) present in brines and the nitrogen trichloride ($NCl_3$) present in the gaseous technical chlorine obtained by electrolysis of the said brines: the said method is **characterized in that** it consists:

a) in continuously withdrawing an amount of sample of gaseous technical chlorine comprising $NCl_3$ directly at the outlet of the electrolysers, in conveying it to a conversion chamber comprising a predetermined amount of a pure aqueous HCl solution replaced at each analysis, and in sparging the said amount of chlorine into the said solution for a period of time at least equal to 15 minutes at a temperature of between 10°C and 40°C;

b) in parallel, in withdrawing a sample of NaCl brine comprising $NH_4^+$ ions, in introducing it into a reaction and measuring vessel, in then introducing into the said vessel, with stirring, the following reactants:

① an aqueous alkaline buffer solution optionally comprising an interference corrector,

② an aqueous solution comprising a hydroxylated aromatic compound and a coloration enhancer,

③ an aqueous solution of a precursor compound of $ClO^-$ ion,

in bringing the said withdrawn amount of brine into contact with the preintroduced reactants for a period of time of between 5 minutes and 30 minutes at a temperature of between 35°C and 50°C, in then measuring the optical density of the coloured compound obtained at a wavelength $\lambda$ equal to 650 nm and deducing therefrom the concentration of $NH_4^+$ in the brine,

c) in halting the sparging of chlorine into the conversion chamber;

d) in stripping the chlorine from the said acidic solution by means of an inert gas for a period of time at least equal to 15 minutes;

e) in optionally bringing to a known volume with pure water and in homogenizing the medium with an inert gas;

f) then, after having emptied and rinsed the reaction and measuring vessel in which the content of $NH_4^+$ in the brine was determined (Stage b)), in injecting into the said vessel an amount by volume of the solution obtained in d) or e) which is identical to that used in b) and of between 0.5 and 5 ml;

g) in neutralizing this amount with an aqueous solution of an alkaline hydroxide, in order to obtain a pH of between 3 and 7, then,

h) in introducing the reactants ①, ② and ③ as in Stage b), then reacting under the same conditions as in Stage b), measuring the optical density of the compound obtained at a wavelength $\lambda$ identical to that used in b) and determining the $NCl_3$ content from the amount of $NH_4^+$ measured;

i) in emptying and in rinsing the conversion chamber and the reaction and measuring vessel respectively with pure water;

j) in then introducing an aqueous HCl solution into the conversion chamber; and

k) in recommencing the preceding operations a) to j).

**2.** Method according to Claim 1, **characterized in that**, in Stage a), the amount of chlorine is sparged into the pure aqueous HCl solution for a period of time of between 1 hour and 4 hours at a temperature of between 10°C and 20°C.

**3.** Method according to Claim 1, **characterized in that** the concentration by weight of HCl in the pure aqueous HCl solutions is between 20% and 40%.

**4.** Method according to Claim 1, **characterized in that**, in Stage b), the withdrawn amount of brine is brought into contact with the reactants ①, ② and ③ for a period of time of between 10 minutes and 20 minutes at a temperature in the region of 40°C.

**5.** Method according to Claim 1, **characterized in that**, in Stage g), the pH is in the region of 4.

**6.** Method according to Claim 1, **characterized in that** the hydroxylated aromatic compound is salicylic acid in the form of the sodium salt.

**7.** Method according to Claim 6, **characterized in that** the concentration of sodium salicylate in the aqueous solution ② is between 290 g/l and 310 g/l.

**8.** Method according to Claim 1, **characterized in that** the precursor compound of ClO⁻ ions is sodium dichloroisocyanurate.

9. Method according to either of Claims 1 and 8, **characterized in that** the concentration of sodium dichloroisocyanurate in the aqueous solution ③ is between 3.80 g/l and 4.20 g/l.

10. Method according to Claim 1, **characterized in that** the interference corrector is sodium citrate.

11. Method according to either of Claims 1 and 10, **characterized in that** the concentration of interference corrector in the aqueous solution ① is between 8 g/l and 12 g/l.

12. Method according to Claim 1, **characterized in that** the coloration enhancer is sodium nitroprussiate.

13. Method according to either of Claims 1 and 12, **characterized in that** the concentration of coloration enhancer in the aqueous solution ② is between 1.90 g/l and 2.10 g/l.

14. Method according to Claim 1, **characterized in that** the aqueous alkaline buffer solution comprises an alkaline hydroxide and an alkaline halide.

15. Method according to either of Claims 1 and 14, **characterized in that**, in the aqueous alkaline buffer solution, the concentration of alkaline hydroxide is between 30 g/l and 40 g/l and **in that** the concentration of alkaline halide is between 30 g/l and 40 g/l.

16. Device for implementing the method according to one of Claims 1 to 15, **characterized in that** it comprises:

   ■ a conversion chamber (1) in which $NCl_3$ present in the gaseous chlorine is converted to $NH_4Cl$ by contact with a pure aqueous HCl solution, the said chamber being equipped with means for feeding and diffusing gases ($Cl_2$, $N_2$, and the like), means for feeding with pure aqueous HCl solutions, means for feeding with dilution water, level detection means, means for removing vented material and waste solutions, means for withdrawing the solution comprising the $NH_4^+$ ions originating from the conversion of $NCl_3$ and, optionally, temperature maintenance means;
   ■ a reaction and measuring vessel (2) in which the $NH_4^+$ ions are first converted to a coloured compound and subsequently the optical density of the said coloured compound is measured; the said vessel, which is cylindrical in shape and substantially vertical, is equipped with two movable and diametrically opposed windows (13), means making it possible to move the said windows, stirring means (10), heating means, means for measuring the optical density of the coloured compound formed in aqueous solution situated between the 2 windows separated by a length L, pH measuring means (14), means for feeding with reactants, means for feeding with brine and solution originating from the conversion chamber, emptying means and rinsing means;

   ■ means for storing the various reactants used in the conversion chamber and in the reaction and measuring vessel,
   ■ a cyclic programming microprocessor unit which successively controls, during each cycle of analysis of the $NH_4^+$ ions originating from the brine or of $NCl_3$ of the chlorine:

   - means for directly withdrawing at the chlorine outlet of the electrolysers and for conveying into the conversion chamber a predetermined amount of gaseous technical chlorine;
   - means for directly withdrawing a predetermined amount of brine feeding the electrolysers and for conveying it into the reaction and measuring vessel;
   - means allowing sequential operation of the various elements (pumps, pneumatic valves) injecting or delivering, from the storage means, predetermined amounts of the reactants into the conversion chamber and into the reaction and measuring vessel;
   - means for transferring a predetermined amount of an acidic aqueous solution comprising $NH_4^+$ ions originating from the conversion of $NCl_3$ in the conversion chamber to the reaction and measuring vessel;
   - means for expressing the optical density of the coloured compound in aqueous solution present in the measuring vessel and for converting it into terms of concentration of $NH_4^+$ ions in the brines and into $NCl_3$ content in the chlorine;
   - means for emptying and rinsing the conversion chamber and the reaction and measuring vessel respectively;
   - means for completely emptying the withdrawal lines, between two operations of sampling brine and/or gaseous chlorine;
   - standardization means, and
   - recording and display means.

17. Device according to Claim 16, **characterized in that** the distance (L) between the two windows (13) of the reaction and measuring vessel is equal to 6 mm.

**18.** Device according to Claim 15, **characterized in that** the means for measuring the optical density of the coloured compound formed in aqueous solution are composed of an emitting diode (14) and of a photosensitive cell (15) which are connected to the microprocessor unit (16) via the line (16.2).

**Patentansprüche**

**1.** Verfahren zum automatischen und direkten Bestimmen des Gehalts an Ammoniumion ($NH_4^+$) in Salzlaken und Stickstofftrichlorid ($NCl_3$), präsent im technischen gasförmigen Chlor, das man durch Elektrolyse der Salzlaken erzielt: das Verfahren ist **dadurch gekennzeichnet, dass** es darin besteht:

a) kontinuierlich eine Probenmenge technisches gasförmiges Chlor, das $NCl_3$ enthält, direkt am Ausgang der Elektrolysegeräte zu entnehmen, sie zu einer Umformumschließung zu bringen, die eine vorausbestimmte Menge einer wässrigen Lösung aus reinem HCl enthält, und die bei jeder Analyse erneuert wird, und die Chlormenge in der Lösung während einer Dauer von mindestens 15 Minuten bei einer Temperatur zwischen 10 °C und 40 °C durchzublasen;

b) parallel dazu eine Salzlakenprobe NaCl zu entnehmen, die $NH_4^+$-Ionen enthält, sie in einen Reaktions- und Messbehälter einzuführen und dann in den Behälter unter Rühren die folgenden Reagenzien einzuführen:

① eine wässrige alkalische Pufferlösung, die eventuell ein Interferenzkorrekturmittel enthält,

② eine wässrige Lösung, die eine aromatische hydroxylierte Verbindung und einen Färbungsverstärker enthält,

③ eine wässrige Lösung einer ClO⁻-Ion-Vorläuferverbindung,

die entnommene Salzlakenmenge mit den zuvor eingeführten Reagenzien während einer Dauer zwischen 5 und 30 Minuten bei einer Temperatur zwischen 35 °C und 50 °C in Kontakt zu bringen, dann die optische Dichte der erzielten farbigen Verbindung mit einer Wellenlänge λ gleich 650 nm zu messen und daraus die $NH_4^+$-Konzentration der Salzlake abzuleiten,

c) das Durchblasen von Chlor in der Unformumschließung zu stoppen;

d) das Chlor der sauren Lösung mittels eines Inertgases während einer Dauer von mindestens 15 Minuten zu strippen;

e) eventuell bis zu einem bekannten Volumen mit reinem Wasser aufzufüllen und das Milieu mit einem Inertgas zu homogenisieren;

f) nach dem Entleeren und Spülen des Reaktionsund Messbehälters, in dem in Schritt b) der $NH_4^+$-Gehalt der Salzlake bestimmt wurde, in den Behälter eine Volumenmenge der in d) oder e) erzielten Lösung einzuspritzen, die gleich groß ist wie die in b) verwendete, und die zwischen 0,5 und 5 ml liegt;

g) diese Menge mit einer wässrigen Lösung eines alkalischen Hydroxids zu neutralisieren, um einen pH zwischen 3 und 7 zu erzielen und

h) dann wie in Schritt b) die Reagenzien ①, ② und ③ einzuführen, danach unter den gleichen Bedingungen wie in Schritt b) reagieren zu lassen, die optische Dichte der erzielten Verbindung bei einer Wellenlänge λ gleich der in b) verwendeten zu messen und den $NCl_3$-Gehalt ausgehend von der gemessenen $NH_4^+$-Menge zu bestimmen;

i) die Umformumschließung und den Reaktions- und Messbehälter zu entleeren und mit reinem Wasser zu spülen;

j) dann in die Umformumschließung eine wässrige HCl-Lösung einzuführen;

k) die Vorgänge a) bis j) wie oben zu wiederholen.

**2.** Verfahren nach Anspruch 1, **dadurch gekennzeichnet, dass** man in Schritt a) die Chlormenge in der reinen wässrigen HCl-Lösung während einer Dauer zwischen 1 und 4 Stunden bei einer Temperatur zwischen 10 °C und 20 °C durchblasen lässt.

**3.** Verfahren nach Anspruch 1, **dadurch gekennzeichnet, dass** die Gewichtskonzentration an HCl der reinen wässrigen HCl-Lösungen zwischen 20 % und 40 % liegt.

**4.** Verfahren nach Anspruch 1, **dadurch gekennzeichnet, dass** man in Schritt b) die entnommene Salzlakenmenge mit den Reagenzien ①, ② und ③ während einer Dauer zwischen 10 Minuten und 20 Minuten bei einer Temperatur nahe an 40 °C in Kontakt bringt.

**5.** Verfahren nach Anspruch 1, **dadurch gekennzeichnet, dass** der pH in dem Schritt g) in der Nähe von 4 liegt.

**6.** Verfahren nach Anspruch 1, **dadurch gekennzeichnet, dass** die aromatische hydroxylierte Verbindung Salicylsäure in Form von Natriumsalz ist.

**7.** Verfahren nach Anspruch 6, **dadurch gekennzeichnet, dass** die Konzentration an Natriumsalicylat in der wässrigen Lösung ② zwischen 290 g/l und 310 g/l liegt.

8. Verfahren nach Anspruch 1, **dadurch gekennzeichnet, dass** die ClO⁻-Ionen-Vorläuferverbindung Natriumdichlorisocyanurat ist.

9. Verfahren nach einem der Ansprüche 1 bis 8, **dadurch gekennzeichnet, dass** die Konzentration an Natriumdichlorisocyanurat in der wässrigen Lösung ③ zwischen 3,80 g/l und 4,20 g/l liegt.

10. Verfahren nach Anspruch 1, **dadurch gekennzeichnet, dass** das Interferenzkorrekturmittel Natriumcitrat ist.

11. Verfahren nach einem der Ansprüche 1 und 10, **dadurch gekennzeichnet, dass** die Konzentration an Interferenzkorrekturmittel in der wässrigen Lösung ① zwischen 8 g/l und 12 g/l liegt.

12. Verfahren nach Anspruch 1, **dadurch gekennzeichnet, dass** der Färbungsverstärker Natriumnitroprussiat ist.

13. Verfahren nach einem der Ansprüche 1 und 12, **dadurch gekennzeichnet, dass** die Konzentration an Färbungsverstärker in der wässrigen Lösung ② zwischen 1,90 g/l und 2,10 g/l liegt.

14. Verfahren nach Anspruch 1, **dadurch gekennzeichnet, dass** die wässrige alkalische Pufferlösung ein alkalisches Hydroxid und ein alkalisches Halogenid enthält.

15. Verfahren nach einem der Ansprüche 1 und 14, **dadurch gekennzeichnet, dass** in der wässrigen alkalischen Pufferlösung die Konzentration an alkalischem Hydroxid zwischen 30 g/l und 40 g/l liegt, und dass die Konzentration an alkalischem Halogenid zwischen 30 g/l und 40 g/l liegt.

16. Vorrichtung zum Anwenden des Verfahrens nach einem der Ansprüche 1 bis 15, **dadurch gekennzeichnet, dass** sie Folgendes umfasst:

- eine Umformumschließung (1), in der $NCl_3$, das in dem gashaltigen Chlor enthalten ist, durch Kontakt mit einer reinen wässrigen HCl-Lösung in $NH_4Cl$ umgeformt wird, wobei die Umschließung mit Versorgungs- und Verteilungsmitteln der Gase ($Cl_2$, $N_2$, ...), mit Versorgungsmitteln mit reinen wässrigen HCl-Lösungen, Versorgungsmitteln mit Verdünnungswasser, Füllstandserfassungsmitteln, Mitteln zum Eliminieren der Entlüftungen und der verbrauchten Lösungen, Mitteln zum Entnehmen der Lösung, die die aus der Umformung von $NCl_3$ stammenden $NH_4^+$-Ionen enthält, und eventuell Mitteln zum Temperaturhalten versehen ist;
- einen Reaktions- und Messbehälter (2), in dem zuerst die Umformung der $NH_4^+$-Ionen in eine farbige Verbindung und dann die Messung der optischen Dichte der farbigen Verbindung erfolgt; der Behälter in im Wesentlichen zylindrischer senkrechter Form ist versehen mit zwei Fenstern (13), die einander diametral gegenüberliegen und beweglich sind, mit Mitteln zum Bewegen der Fenster, Rührmitteln (10), Heizmitteln, Messmitteln der optischen Dichte der in wässriger Lösung zwischen den zwei um eine Länge L beabstandeten Fenstern gebildeten farbigen Verbindung, mit Messmitteln des pH (14), Versorgungsmitteln für Reagenzien, Versorgungsmitteln für Salzlake und Lösung aus der Umformumschließung, Entleerungs- und Spülmitteln;

- Lagermittel der verschiedenen Reagenzien, die in der Umformumschließung und in dem Reaktions- und Messbehälter verwendet werden,
- eine Mikroprozessoreinheit zum zyklischen Programmieren, die nacheinander im Laufe jedes Analysezyklus der $NH_4^+$-Ionen, die von der Salzlake oder dem $NCl_3$ des Chlors stammen, Folgendes steuert:

  - Mittel zum direkten Entnehmen auf dem Chlorausgang der Elektrolysegeräte und Zuführen in die Umformumschließung einer bestimmten Menge an gasförmigem technischem Chlor;
  - Mittel zum direkten Entnehmen einer bestimmten Salzlakenmenge, die die Elektrolysegeräte versorgt und deren Zuführen in den Reaktions- und Messbehälter;
  - Mittel, die das sequenzielle Bedienen der verschiedenen Organe (Pumpen, Druckluftventile) erlauben, die ausgehend von Lagermitteln bestimmte Mengen der Reagenzien in die Umformumschließung und in den Reaktions- und Messbehälter einspritzen oder liefern;
  - Transfermittel zu dem Reaktions- und Messbehälter für eine bestimmte Menge einer sauren wässrigen Lösung, die $NH_4^+$-Ionen enthält, die von der $NCl_3$-Umformung der Umformumschließung kommen;
  - Mittel zum Ausdrücken der optischen Dichte der farbigen Verbindung in wässriger Lösung, die in dem Messbehälter enthalten ist, und um sie in Bezug auf die Konzentration an $NH_4^+$-Ionen in den Salzlaken und an $NCl_3$-Gehalt in dem Chlor umzuformen;
  - Mittel zum Entleeren und Spülen jeweils der Umformumschließung und des Reaktions- und Messbehälters;
  - Mittel zum völligen Entleeren der Entnahmekreisläufe zwischen zwei Probenahmen an Salzlake und/oder gasförmigem Chlor;

- Eichmittel und
- Aufzeichnungs- und Anzeigemittel.

**17.** Vorrichtung nach Anspruch 16, **dadurch gekennzeichnet, dass** die Entfernung (L) zwischen den zwei Fenstern (13) des Reaktions- und Messbehälters 6 mm beträgt.

**18.** Vorrichtung nach Anspruch 15, **dadurch gekennzeichnet, dass** die Messmittel der optischen Dichte der in wässriger Lösung gebildeten farbigen Verbindung aus einer Sendediode (14) und einer Photodiode (15) bestehen, die mit der Mikroprozessoreinheit (16) über den Weg (16.2) verbunden sind.

FIGURE 1